# EUROPÄISCHE PATENTSCHRIFT

(11) **EP 2 080 072 B1**
(45) Veröffentlichungstag und Bekanntmachung des Hinweises auf die Patenterteilung: **15.09.2010**
(21) Anmeldenummer: 07803493.1
(22) Anmeldetag: 14.09.2007
(51) Int. Cl.: G05B 19/401

(54) **VERFAHREN UND VORRICHTUNG ZUM ERMITTELN EINES SIGNALVERSATZES EINES NICKRATENSENSORS**
METHOD AND APPARATUS FOR DETERMINING A SIGNAL OFFSET OF A PITCH RATE SENSOR
PROCÉDÉ ET DISPOSITIF POUR DÉTERMINER LE DÉCALAGE DE SIGNAL D'UN DÉTECTEUR DE TAUX DE TANGAGE

(30) Priorität: 18.10.2006 DE 102006049118
(43) Veröffentlichungstag der Anmeldung: 22.07.2009
(73) Patentinhaber: Continental Automotive GmbH, 30165 Hannover (DE)
(72) Erfinder: KRETSCHMANN, Matthias, 93047 Regensburg (DE); SCHWEIGER, Thomas, 93086 Wörth (DE); STRATESTEFFEN, Martin, 93049 Regensburg (DE)
(86) Internationale Anmeldenummer: PCT/EP2007/059696
(87) Internationale Veröffentlichungsnummer: WO 2008/046700

(56) Entgegenhaltungen:
- DE-A1-102005 056 329
- US-A1- 2006 155 440
- KUHL, PATRICK: "Anpassung der Lichtverteilung des Abblendlichtes an den vertikalen Straßenverlauf" 8. September 2006 (2006-09-08), DISSERTATION UNIVERSITÄT PADERBORN , XP002460978 Seite 41, Zeile 16 - Seite 51, Zeile 3

## Beschreibung

Die Erfindung betrifft ein Verfahren und eine Vorrichtung zum Ermitteln eines Signalversatzes eines Nickratensensors. Der Nickratensensor ist in einem Fahrzeug angeordnet. Zum Ermitteln des Signalversatzes wird ein Signal des Nickratensensors erfasst.

Das Signal des Nickratensensors ist repräsentativ für eine Nickrate des Fahrzeugs. Die Nickrate beschreibt eine Drehung des Fahrzeugs um eine Querachse des Fahrzeugs, die sich durch einen Schwerpunkt des Fahrzeugs erstreckt. Falls sich das Fahrzeug nicht um die Querachse des Fahrzeugs dreht, sollte der Nickratensensor ein Signal erzeugen, das dafür repräsentativ ist, dass die Nickrate gleich Null ist. In der Regel weisen Nickratensensoren jedoch einen Signalversatz auf. Der Signalversatz kann auch als Offset bezeichnet werden. Der Signalversatz bewirkt, dass der Nickratensensor selbst in absoluter Ruheposition eine Nickrate signalisiert, die ungleich Null ist. Falls der Signalversatz bekannt ist, kann dieser bei der Ermittlung der Nickrate berücksichtigt werden. Somit kann durch Kenntnis des Signalversatzes die Nickrate besonders präzise ermittelt werden.

Aus der US 2006/0155440 A1 ist ein Verfahren bekannt, bei dem der Signalversatz eines Nickratensensors in einem Fahrzeug unmittelbar nach Betätigung des Anlassers und damit bei stehendem Fahrzeug durch Mittelwertbildung zu ermitteln und zu kompensieren. Problematisch bei dem vorbekannten Verfahren ist es, dass der Signalversatz nur zu einem bestimmten Zeitpunkt ermittelt werden kann.

Es ist Aufgabe der Erfindung ein Verfahren und eine Vorrichtung zum Ermitteln eines Signalversatzes eines Nickratensensors zu schaffen, das beziehungsweise die jederzeit einfach ein besonders präzises Ermitteln des Signalversatzes des Nickratensensors ermöglicht.

Die Aufgabe der Erfindung wird gelöst durch die Merkmale der unabhängigen Ansprüche. Vorteilhafte Ausgestaltungen der Erfindung sind in den Unteransprüchen angegeben.

Die Erfindung zeichnet sich aus durch ein Verfahren und eine Vorrichtung zum Ermitteln eines Signalversatzes eines Nickratensensors eines Fahrzeugs. Ein Signal des Nickratensensors wird erfasst. Eine Längsbeschleunigung des Fahrzeugs wird ermittelt. Eine zeitliche Ableitung der Längsbeschleunigung wird ermittelt. Es wird überprüft, ob ein Betrag der zeitlichen Ableitung der Längsbeschleunigung kleiner als ein erster vorgegebener Schwellenwert ist. Abhängig vom Signal des Nickratensensors wird der Signalversatz des Nickratensensors ermittelt, falls der Betrag der zeitlichen Ableitung der Längsbeschleunigung kleiner als der erste vorgegebene Schwellenwert ist.

Dies ermöglicht ein Ermitteln des Signalversatzes des Nickratensensors des Fahrzeugs. Insbesondere ermöglicht dies ein dynamisches Ermitteln des Signalversatzes des Nickratensensors trotz einer Bewegung des Fahrzeugs. Dies trägt zu einem präzisen Ermitteln des Signalversatzes des Nickratensensors bei. Der Signalversatz des Nickratensensors kann auch als Offset des Nickratensensors bezeichnet werden.

In einer vorteilhaften Ausgestaltung des Verfahrens wird das Signal des Nickratensensors über eine vorgegebene Zeitdauer erfasst. Der Signalversatz wird nur abhängig von den Teilen des Signals des Nickratensensors ermittelt, die erfasst werden, während der Betrag der zeitlichen Ableitung der Längsbeschleunigung kleiner als der erste vorgegebene Schwellenwert ist. Somit können sich mehrere Teilintervalle ergeben, in denen der Signalversatz ermittelt wird. Eine Mittelung über das Signal des Nickratensensors zum Ermitteln des Signalversatzes kann sich über ein oder mehrere Teilintervalle erstrecken. Dies ermöglicht besonders einfach und präzise das dynamische Ermitteln des Signalversatzes des Nickratensensors.

In einer weiteren vorteilhaften Ausgestaltung des Verfahrens wird die Längsbeschleunigung des Fahrzeugs mit einem Längsbeschleunigungssensor ermittelt. Dies trägt zu einem besonders präzisen Ermitteln der Längsbeschleunigung des Fahrzeugs und damit des Signalversatzes des Nickratensensors bei.

In einer weiteren vorteilhaften Ausgestaltung des Verfahrens wird die Längsbeschleunigung des Fahrzeugs abhängig von einer Fahrzeuggeschwindigkeit des Fahrzeugs und zumindest einer Radgeschwindigkeit eines Rades des Fahrzeugs ermittelt. Dies kann zu einem besonders präzisen Ermitteln des Signalversatzes des Nickratensensors beitragen. Ferner kann dadurch auf einen Längsbeschleunigungssensor verzichtet werden oder ein Signal des Längsbeschleunigungssensors plausibilisiert werden. Die Radgeschwindigkeit ist die Geschwindigkeit, mit der sich ein Schwerpunkt des Rades relativ zum Grund bewegt, über den das Fahrzeug fährt und insbesondere über den das entsprechende Rad rollt.

In einer weiteren vorteilhaften Ausgestaltung des Verfahrens wird die Radgeschwindigkeit zumindest des einen Rades des Kraftfahrzeugs ermittelt. Der Signalversatz des Nickratensensors wird abhängig vom Signal des Nickratensensors ermittelt, falls ein Betrag der ermittelten Radgeschwindigkeit des entsprechenden Rades kleiner als ein zweiter vorgegebener Schwellenwert ist. Dies kann einfach dazu beitragen, einen Fahrzeugstillstand zu erkennen, und so dazu beitragen, während des Fahrzeugstillstands besonders präzise und stationär den Signalversatz des Nickratensensors zu ermitteln.

In einer weiteren vorteilhaften Ausgestaltung des Verfahrens wird die Fahrzeuggeschwindigkeit ermittelt. Der Signalversatz des Nickratensensors wird abhängig vom Signal des Nickratensensors ermittelt, falls der Betrag der ermittelten Fahrzeuggeschwindigkeit kleiner als der zweite vorgegebene Schwellenwert ist. Dies kann einfach dazu beitragen, den Fahrzeugstillstand besonders präzise zu erkennen, und so dazu beitragen, während des Fahrzeugstillstands besonders präzise den Signalversatz des Nickratensensors stationär zu ermitteln.

In einer weiteren vorteilhaften Ausgestaltung des Verfahrens wird eine zeitliche Ableitung des Signals des Nickratensensors ermittelt. Der Signalversatz des Nickratensensors wird abhängig vom Signal des Nickratensensors ermittelt, falls ein Betrag der zeitlichen Ableitung des Signals des Nickratensensors kleiner als ein dritter vorgegebener Schwellenwert ist. Dies kann einfach dazu beitragen, den Signalversatz besonders präzise zu erkennen, da der Signalversatz typischerweise relativ konstant ist. Sollte sich somit das Signal des Nickratensensors stark ändern, so kann dafür regelmäßig nicht der Signalversatz verantwortlich sein. Ist somit der Betrag der zeitlichen Ableitung kleiner als der dritte vorgegebene Schwellenwert, so kann davon ausgegangen werden, dass das aktuelle Signal des Nickratensensors lediglich den Signalversatz des Nickratensensors repräsentiert.

Die vorteilhaften Ausgestaltungen des Verfahrens können ohne weiteres auf vorteilhafte Ausgestaltung der Vorrichtung übertragen werden.

Die Erfindung ist im Folgenden anhand von schematischen Zeichnungen näher erläutert.

Es zeigen:
- Figur 1: ein Fahrzeug,
- Figur 2: ein erstes Programm zum Ermitteln des Signalversat- zes,

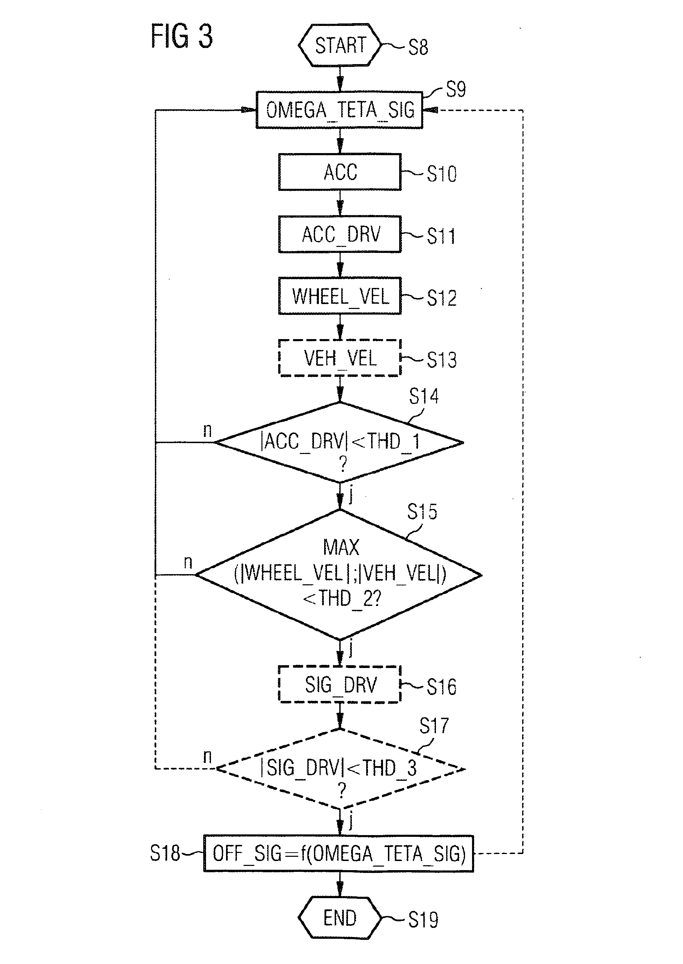

- Figur 3: ein zweites Programm zum Ermitteln des Signalver- satzes,
- Figur 4: zwei Rechenvorschriften zum Ermitteln des Signal- versatzes.

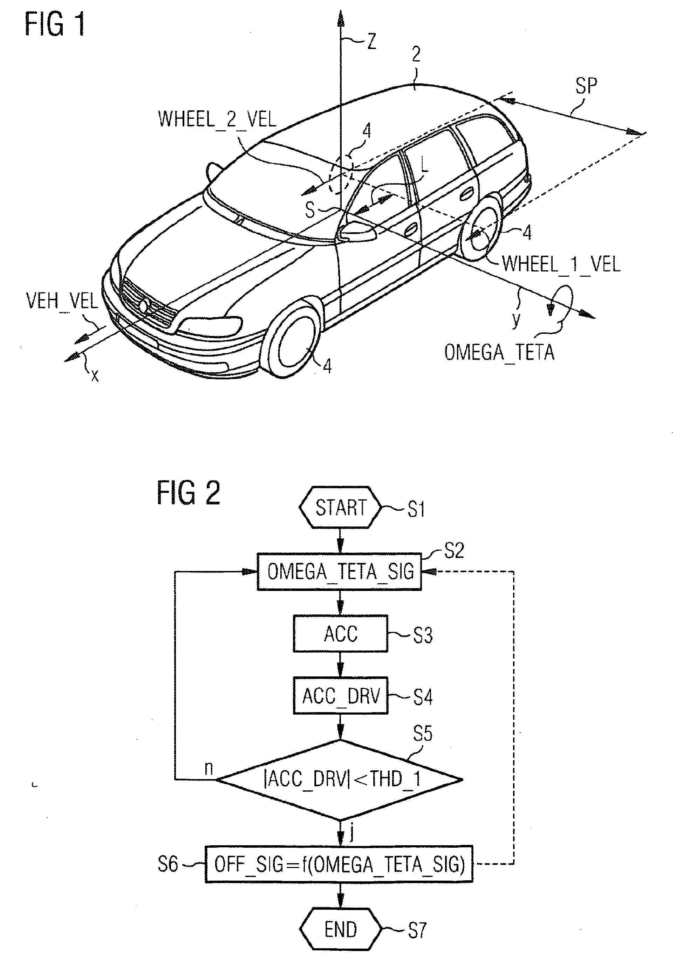

Elemente gleicher Konstruktion oder Funktion sind figurenübergreifend mit den gleichen Bezugszeichen gekennzeichnet. Ein Fahrzeug 2 (Figur 1) weist einen Schwerpunkt S auf. Ein Koordinatensystem ist so vorgegeben, dass eine X-Achse X repräsentativ ist für eine Längsachse des Fahrzeugs 2, dass eine Y-Achse Y repräsentativ ist für eine Querachse des Fahrzeugs 2 und dass eine Z-Achse Z repräsentativ ist für eine Hochachse des Fahrzeugs 2. Die Achsen schneiden sich im Schwerpunkt S. Eine Hinterachse des Fahrzeugs 2 weist eine Spurweite SP auf. Die Hinterachse hat einen Achsabstand L zum Schwerpunkt S. Ferner weist das Fahrzeug 2 vorzugsweise vier Räder 4 auf. Das Fahrzeug 2 kann jedoch auch mehr oder weniger Räder 4 umfassen.

Eine Nickrate OMEGA_TETA ist repräsentativ für eine Drehung des Fahrzeugs 2 um die Querachse des Fahrzeugs 2. Eine Fahrzeuggeschwindigkeit VEH_VEL repräsentiert eine Geschwindigkeit des Fahrzeugs 2. Eine Radgeschwindigkeit WHEEL_1_VEL eines ersten Hinterrades und eine Radgeschwindigkeit WHEEL_2_VEL eines zweiten Hinterrades repräsentieren Längsgeschwindigkeiten der entsprechenden Radschwerpunkte relativ zum Grund, der überfahren wird. Die Radgeschwindigkeiten werden vorzugsweise abhängig von Radien der Räder 4 und abhängig von Winkelgeschwindigkeiten ermittelt, mit der sich die entsprechenden Räder 4 um die eigene Achse drehen.

Ein Nickratensensor ermöglicht einfach das Ermitteln der Nickrate OMEGA_TETA des Fahrzeugs 2. Die Nickrate wird vorzugsweise zum Ermitteln einer Orientierung des Fahrzeugs 2 herangezogen. Ferner kann beispielsweise abhängig von der Nickrate OMEGA_TETA beim Befahren einer Kuppe, einer Senke oder beim Einfahren in eine Steigung eine Referenzgeschwindigkeit der Fahrzeuggeschwindigkeit VEH_VEL ermittelt werden. Dies kann beispielsweise dazu beitragen, dass ein automatisches Bremssystem, beispielsweise ein ABS-System, sehr präzise steuerbar ist.

Durch eine Veränderung einer Temperatur und/oder durch einen Alterungsprozess des Nickratensensors kann ein Signalversatz OFF_SIG des Nickratensensors erzeugt und/oder verändert werden. Beim Signalversatz OFF_SIG handelt es sich um eine Nullpunktverschiebung, die bewirkt, dass die Nickrate OMEGA_TETA größer oder kleiner signalisiert wird, als sie tatsächlich ist. Der Nickratensensor ist vorzugsweise ein Drehratensensor.

Falls bekannt ist, dass sich der Nickratensensor in Ruhe befindet, kann der Signalversatz OFF_SIG durch Mitteln des Signals OMEGA_TETA_SIG des Nickratensensors ermittelt werden. Der Signalversatz OFF_SIG kann dann beim Ermitteln der Nickrate OMEGA_TETA berücksichtigt werden, so dass die Nickrate OMEGA_TETA auch bei unterschiedlichen Temperaturen und/oder bei einem älteren Nickratensensor korrekt ermittelt wird.

Ein Nicken des Fahrzeugs 2 mit der Nickrate OMEGA_TETA wird regelmäßig durch eine Veränderung einer Längsbeschleunigung ACC des Fahrzeugs 2 hervorgerufen. Ist somit die Längsbeschleunigung ACC näherungsweise konstant, so kann davon ausgegangen werden, dass die tatsächliche Nickrate OMEGA_TETA gleich Null ist. Insbesondere ist die tatsächliche Nickrate OMEGA_TETA proportional zu einer zeitlichen Ableitung ACC_DRV der Längsbeschleunigung ACC des Fahrzeugs 2.

Ein erstes Programm zum Ermitteln des Signalversatzes OFF_SIG des Nickratensensors ist vorzugsweise auf einem Speichermedium einer Steuervorrichtung des Fahrzeugs 2 gespeichert. Das erste Programm dient dazu, den Signalversatz OFF_SIG dynamisch, also auch während einer Fahrt des Fahrzeugs 2, zu ermitteln. Das erste Programm wird vorzugsweise in einem Schritt S1 gestartet, in den gegebenenfalls Variablen initialisiert werden.

In einem Schritt S2 wird ein Signal OMEGA_TETA_SIG des Nickratensensor ermittelt.

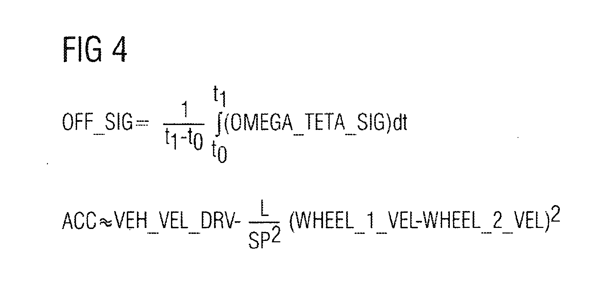

In einem Schritt S3 wird die Längsbeschleunigung ACC des Fahrzeugs 2 ermittelt. Die Längsbeschleunigung ACC des Fahrzeugs 2 kann beispielsweise durch einen Längsbeschleunigungssensor ermittelt werden. Alternativ dazu kann die Längsbeschleunigung auch anhand der in der Figur 4 angegebenen Rechenvorschrift ermittelt werden (Figur 4). Nach dieser Rechenvorschrift kann die Längsbeschleunigung ACC abhängig von einer zeitlichen Ableitung VEH_VEL_DRV der Fahrzeuggeschwindigkeit VEH_VEL, der Radgeschwindigkeit WHEEL_1_VEL des ersten Hinterrades und der Radgeschwindigkeit WHEEL_2_VEL des zweiten Hinterrades ermittelt werden.

In einem Schritt S4 wird die zeitliche Ableitung ACC_DRV der Längsbeschleunigung ACC des Fahrzeugs 2 ermittelt.

In einem Schritt S5 wird überprüft, ob ein Betrag der zeitlichen Ableitung ACC_DRV kleiner als ein erster vorgegebener Schwellenwert THD_1 ist. Ist die Bedingung des Schritts S5 nicht erfüllt, so wird die Bearbeitung im Schritt S2 fortgesetzt. Ist die Bedingung des Schritts S5 erfüllt, so kann die Bearbeitung in einem Schritt S6 fortgesetzt werden.

Im Schritt S6 wird der Signalversatz OFF_SIG abhängig vom Signal OMEGA_TETA_SIG des Nickratensensor ermittelt, vorzugsweise nach der in Figur 4 angegebenen Rechenvorschrift. Gemäß dieser Rechenvorschrift wird das Signal OMEGA_TETA_SIG des Nickratensensors über einen Zeitraum von einem Startzeitpunkt t₀ bis zu einem Endzeitpunkt t₁ ermittelt. Der Startzeitpunkt t₀ und der Endzeitpunkt t₁ werden durch die im Schritt S5 angegebene Bedingung definiert. Sollte die Bedingung des Schritts S5 während des Ermittelns des Signalversatzes im Schritt S6 nicht mehr erfüllt sein, so wird das erste Programm unterbrochen. Vorzugsweise wird der Signalversatz OFF_SIG über einen längeren Zeitraum ermittelt, in dem das Ermitteln des Signalversatzes OFF_SIG öfters unterbrochen wird. Es werden jedoch lediglich die Anteile des Signals OMEGA_TETA_SIG des Nickratensensors zum Ermitteln des Signalversatzes OFF_SIG herangezogen, während deren Ermittlung die Bedingung des Schritts S5 erfüllt ist. Alternativ zur zeitlichen Mittelung des Signals OMEGA_TETA_SIG des Nickratensensors können auch die einzelnen Werte, aus denen das Signal OMEGA_TETA_SIG des Nickratensensors besteht, über die Anzahl aller erfassten Werte gemittelt werden. Alternativ kann die Mittelung durch einen Tiefpassfilter erfolgen.

In einem Schritt S7 kann das erste Programm beendet werden. Vorzugsweise wird das erste Programm jedoch während des Betriebes des Fahrzeugs 2 regelmäßig abgearbeitet.

Alternativ oder zusätzlich kann ein zweites Programm zum Ermitteln des Signalversatzes OFF_SIG auf dem Speichermedium der Steuervorrichtung abgespeichert sein. Das zweite Programm dient dazu, bei einem Stillstand des Fahrzeugs 2 zuverlässig und präzise den Signalversatz OFF_SIG des Nickratensensors zu ermitteln. Beispielsweise ermöglicht das zweite Programm ein sehr präzises Ermitteln des Signalversatzes OFF_SIG, falls das Fahrzeug 2 transportiert wird, beispielsweise auf einer Fähre und/oder einem Verladezug. Das zweite Programm wird vorzugsweise in einem Schritt S8 gestartet, in dem gegebenenfalls Variablen initialisiert werden.

In einem Schritt S9 wird das Signal OMEGA_TETA_SIG des Nickratensensors erfasst.

In einem Schritt S10 wird die Längsbeschleunigung ACC des Fahrzeugs 2 ermittelt.

In einem Schritt S11 wird die zeitliche Ableitung ACC_DRV der Längsbeschleunigung ACC des Fahrzeugs 2 ermittelt.

In einem Schritt S12 wird eine Radgeschwindigkeit WHEEL_VEL zumindest eines der Räder 4 des Fahrzeugs 2 ermittelt. Bevorzugt werden die Radgeschwindigkeiten WHEEL_VEL aller Räder 4 ermittelt, insbesondere die Radgeschwindigkeit WHEEL_1_VEL des ersten Hinterrades und die Radgeschwindigkeit WHEEL_2_VEL des zweiten Hinterrades.

Zusätzlich kann in einem Schritt S13 die Fahrzeuggeschwindigkeit VEH_VEL ermittelt werden. Dies ist besonders dann vorteilhaft, wenn die Längsgeschwindigkeit VEH_VEL des Fahrzeugs 2 unabhängig von der Radgeschwindigkeit WHEEL_VEL der Räder 4 bekannt ist, beispielsweise bei Verwendung eines ABS-Systems im Fahrzeug 2.

In einem Schritt S14 wird überprüft, ob der Betrag der zeitlichen Ableitung ACC_DRV der Längsbeschleunigung ACC kleiner ist als der erste vorgegebene Schwellenwert THD_1. Ist die Bedingung des Schritts S14 nicht erfüllt, so wird die Bearbeitung erneut im Schritt S9 fortgesetzt. Ist die Bedingung des Schritts S14 erfüllt, so wird die Bearbeitung in einem Schritt S15 fortgesetzt.

Im Schritt S15 wird eine Maximalauswahl MAX aus den Beträgen der Radgeschwindigkeiten WHEEL_VEL der Räder 4 und dem Betrag der Längsgeschwindigkeit VEH_VEL des Fahrzeugs 2 ermittelt. In anderen Worten wird überprüft, welcher Betrag der Radgeschwindigkeiten WHEEL_VEL oder der Längsgeschwindigkeit VEH_VEL der größte ist. Daraufhin wird überprüft ob der größte der Beträge kleiner als ein vorgegebener zweiter Schwellenwert THD_2 ist. Ist die Bedingung des Schritts S15 nicht erfüllt, so wird die Bearbeitung erneut im Schritt S9 fortgesetzt. Ist die Bedingung des Schritts S15 erfüllt, so kann die Bearbeitung in einem Schritt S16 oder einem Schritt S18 fortgesetzt werden.

Im Schritt S16 kann zusätzlich eine zeitliche Ableitung SIG_DRV des Signals OMEGA_TETA_SIG des Nickratensensors ermittelt werden.

Falls im Schritt S16 die zeitliche Ableitung SIG_DRV des Signals OMEGA_TETA_SIG des Nickratensensors ermittelt wurde, kann in einem Schritt S17 überprüft werden, ob ein Betrag der zeitlichen Ableitung SIG_DRV des Signals OMEGA_TETA_SIG des Nickratensensors kleiner ist als ein dritter vorgegebener Schwellenwert. Dies beruht auf der Erkenntnis, dass der Signalversatz OFF_SIG in der Regel einen konstanten Beitrag zum Signal OMEGA_TETA_SIG des Nickratensensors liefert. Sollte somit die zeitliche Ableitung SIG_DRV des Signals OMEGA_TETA_SIG des Nickratensensors gleich oder größer dem dritten vorgegebenen Schwellenwert THD_3 sein, so kann es sich bei dem aktuellen Signal OMEGA_TETA_SIG des Nickratensensors nicht nur um den Signalversatz OFF_SIG des Nickratensensor handeln. Ist die Bedingung des Schritts S17 nicht erfüllt, so wird die Bearbeitung erneut im Schritt S9 fortgesetzt. Ist die Bedingung des Schritts S17 erfüllt, so wird die Bearbeitung im Schritt S18 fortgesetzt.

Im Schritt S18 wird gemäß dem Schritt S6 des ersten Programms der Signalversatz OFF_SIG abhängig vom Signal OMEGA_TETA_SIG des Nickratensensors ermittelt.

In einem Schritt S19 kann das zweite Programm beendet werden. Vorzugsweise wird das zweite Programm während des Betriebs des Fahrzeugs 2 regelmäßig abgearbeitet.

## Patentansprüche

1. Verfahren zum Ermitteln eines Signalversatzes (OFF_SIG) eines Nickratensensors eines Fahrzeugs (2), bei dem
- ein Signal (OMEGA_TETA_SIG) des Nickratensensors erfasst wird,
- eine Längsbeschleunigung (ACC) des Fahrzeugs (2) ermittelt wird,
- eine zeitliche Ableitung (ACC_DRV) der Längsbeschleunigung (ACC) ermittelt wird,
- überprüft wird, ob ein Betrag der zeitlichen Ableitung (ACC_DRV) der Längsbeschleunigung (ACC) kleiner als ein erster vorgegebener Schwellenwert (THD_1) ist,
- abhängig vom Signal (OMEGA_TETA_SIG) des Nickratensensors der Signalversatz (OFF_SIG) des Nickratensensors ermittelt wird, falls der Betrag der zeitlichen Ableitung (ACC_DRV) der Längsbeschleunigung (ACC) kleiner als der erste vorgegebene Schwellenwert (THD_1) ist.

2. Verfahren nach Anspruch 1, bei dem das Signal (OMEGA_TETA_SIG) des Nickratensensors über eine vorgegebene Zeitdauer erfasst wird und der Signalversatz (OFF_SIG) nur abhängig von den Anteilen des Signals (OMEGA_TETA_SIG) des Nickratensensors ermittelt wird, die erfasst werden, während der Betrag der zeitlichen Ableitung (ACC_DRV) der Längsbeschleunigung (ACC) kleiner als der erste vorgegebene Schwellenwert (THD_1) ist.

3. Verfahren nach einem der vorstehenden Ansprüche, bei dem die Längsbeschleunigung (ACC) des Fahrzeugs (2) mit einem Längsbeschleunigungs-Sensor ermittelt wird.

4. Verfahren nach einem der vorstehenden Ansprüche, bei dem die Längsbeschleunigung (ACC) des Fahrzeugs (2) abhängig von einer Fahrzeuggeschwindigkeit (VEH_VEL) des Fahrzeugs (2) und zumindest einer Radgeschwindigkeit (WHEEL_VEL) eines Rades (4) des Fahrzeugs (2) ermittelt wird.

5. Verfahren nach einem der vorstehenden Ansprüche, bei dem eine Radgeschwindigkeit (WHEEL_VEL) zumindest eines Rades (4) des Kraftfahrzeugs (2) ermittelt wird und bei dem der Signalversatz (OFF_SIG) des Nickratensensors abhängig vom Signal (OMEGA_TETA_SIG) des Nickratensensors ermittelt wird, falls ein Betrag der ermittelten Radgeschwindigkeit (WHEEL_VEL) des entsprechenden Rades (2) kleiner als ein zweiter vorgegebener Schwellenwert (THD_2) ist.

6. Verfahren nach einem der vorstehenden Ansprüche, bei dem eine Fahrzeuggeschwindigkeit (VEH_VEL) ermittelt wird und bei dem der Signalversatz (OFF_SIG) des Nickratensensors abhängig vom Signal (OMEGA_TETA_SIG) des Nickratensensors ermittelt wird, falls ein Betrag der ermittelten Fahrzeuggeschwindigkeit (VEH_VEL) kleiner als der zweite vorgegebene Schwellenwert (THD_2) ist.

7. Verfahren nach einem der vorstehenden Ansprüche, bei dem eine zeitliche Ableitung (SIG_DRV) des Signals (OMEGA_TETA_SIG) des Nickratensensors ermittelt wird und bei dem der Signalversatz (OFF_SIG) des Nickratensensors abhängig vom Signal (OMEGA_TETA_SIG) des Nickratensensors ermittelt wird, falls ein Betrag der zeitlichen Ableitung (SIG_DRV) des Signals (OMEGA_TETA_SIG) des Nickratensensors kleiner als ein dritter vorgegebener Schwellenwert (THD_3) ist.

8. Vorrichtung zum Ermitteln eines Signalversatzes (OFF_SIG) eines Nickratensensors eines Fahrzeugs (2), die ausgebildet ist zum
- Erfassen eines Signals (OMEGA_TETA_SIG) des Nickratensensors,
- Ermitteln einer Längsbeschleunigung (ACC) des Fahrzeugs (2),
- Ermitteln einer zeitlichen Ableitung (ACC_DRV) der Längsbeschleunigung (ACC),
- Überprüfen, ob ein Betrag der zeitlichen Ableitung (ACC_DRV) der Längsbeschleunigung (ACC) kleiner als ein erster vorgegebener Schwellenwert (THD_1) ist,
- Ermitteln des Signalversatzes (OFF_SIG) des Nickratensensors abhängig vom Signal (OMEGA_TETA_SIG) des Nickratensensors, falls der Betrag der zeitlichen Ableitung (ACC_DRV) der Längsbeschleunigung (ACC) kleiner als der erste vorgegebene Schwellenwert (THD_1) ist.

## Claims

1. Method for determining a signal offset (OFF_SIG) of a pitch rate sensor of a motor vehicle (2), in which
- a signal (OMEGA_TETA_SIG) of the pitch rate sensor is detected,
- a longitudinal acceleration (ACC) of the vehicle (2) is determined,
- a time derivation (ACC_DRV) of the longitudinal acceleration (ACC) is determined,
- a check is made as to whether an amount of the time derivation (ACC_DRV) of the longitudinal acceleration (ACC) is less than a first predetermined threshold value (THD_1),
- depending on the signal (OMEGA_TETA_SIG) of the pitch rate sensor, the signal offset (OFF_SIG) of the pitch rate sensor is determined if the amount of the time derivation (ACC_DRV) of the longitudinal acceleration (ACC) is less than the first predetermined threshold value (THD_1).

2. Method according to claim 1, in which the signal (OMEGA_TETA_SIG) of the pitch rate sensor is detected over a predetermined period of time and the signal offset (OFF_SIG) is only determined as a function of the proportions of the signal (OMEGA_TETA_SIG) of the pitch rate sensor which are detected while the amount of the time derivation (ACC_DRV) of the longitudinal acceleration (ACC) is less than the first predetermined threshold value (THD_1).

3. Method according to one of the previous claims, in which the longitudinal acceleration (ACC) of the vehicle (2) is determined with a longitudinal acceleration sensor.

4. Method according to one of the previous claims, in which the longitudinal acceleration (ACC) of the vehicle (2) is determined as function of the velocity (VEH_VEL) of the vehicle (2) and at least one wheel velocity (WHEEL_VEL) of a wheel (4) of the vehicle (2).

5. Method according to one of the previous claims, in which the wheel velocity (WHEEL_VEL) of at least one wheel (4) of the vehicle (2) is determined and in which the signal offset (OFF_SIG) of the pitch rate sensor is determined as a function of the signal (OMEGA_TETA_SIG) of the pitch rate sensor if an amount of the wheel velocity (WHEEL_VEL) determined of the corresponding wheel (2) is less than the second predetrmined threshold value (THD_2).

6. Method according to one of the previous claims, in which the vehicle velocity (VEH_VEL) is determined and in which the signal offset (OFF_SIG) of the pitch rate sensor is determined as a function of the signal (OMEGA_TETA_SIG) of the pitch rate sensor, if an amount of the vehicle velicity (VEH_VEL) determined is less than a second predetermined threshold value (THD_2).

7. Method according to one of the previous claims, in which a time derivation (SIG_DRV) of the signal (OMEGA_TETA_SIG) of the pitch rate sensor is determined and in which the signal offset (OFF_SIG) of the pitch rate sensor is determined as a function of the signal (OMEGA_TETA_SIG) of the pitch rate sensor, if an amount of the time derivation (SIG_DRV) of the signal (OMEGA_TETA_SIG) of the pitch rate sensor is less than a third predetermined threshold value (THD 3).

8. Apparatus for determining a signal offset (OFF_SIG) of a pitch rate sensor of a vehicle (2), which is embodied to
- detect a signal (OMEGA_TETA_SIG) of the pitch rate sensor,
- determine a longitudinal acceleration (ACC) of the motor vehicle (2).
- determine a time derivation (ACC_DRV) of the longitudinal acceleration (ACC),
- check whether an amount of the time derivation (ACC_DRV) of the longitudinal acceleration (ACC) is less than a first predetermined threshold value (THD_1).
- determine the signal offset (OFP_SIG) of the pitch rate sensor as a function of the signal (OMEGA_TETA_SIG) of the pitch rate sensor, if the amount of the time derivation (ACC_DRV) of the longitudinal acceleration (ACC) is less than the first predetermined threshold value (THD_1).

## Revendications

1. Procédé pour déterminer un décalage de signal (OFF_SIG) d'un capteur de taux de tangage d'un véhicule (2), avec lequel
- un signal (OMEGA_TETA_SIG) du capteur de taux de tangage est enregistré,
- une accélération longitudinale (ACC) du véhicule (2) est déterminée,
- une dérivée dans le temps (ACC_DRV) de l'accélération longitudinale (ACC) est déterminée,
- on vérifie si une valeur de la dérivée dans le temps (ACC_DRV) de l'accélération longitudinale (ACC) est inférieure à une première valeur seuil prédéfinie (THD_1),
- le décalage de signal (OFF_SIG) du capteur de taux de tangage est déterminé en fonction du signal (OMEGA_TETA_SIG) du capteur de taux de tangage dans le cas où la valeur de la dérivée dans le temps (ACC_DRV) de l'accélération longitudinale (ACC) est inférieure à la première valeur seuil prédéfinie (THD_1).

2. Procédé selon la revendication 1, avec lequel le signal (OMEGA_TETA_SIG) du capteur de taux de tangage est enregistré au moyen d'une durée prédéfinie et le décalage de signal (OFF_SIG) est déterminé seulement en fonction des fractions du signal (OMEGA_TETA_SIG) du capteur de taux de tangage qui sont enregistrées, alors que la valeur de la dérivée dans le temps (ACC_DRV) de l'accélération longitudinale (ACC) est inférieure à la première valeur seuil prédéfinie (THD_1).

3. Procédé selon l'une quelconque des revendications précédentes, avec lequel l'accélération longitudinale (ACC) du véhicule (2) est déterminée avec un capteur d'accélération longitudinale.

4. Procédé selon l'une quelconque des revendications précédentes, avec lequel l'accélération longitudinale (ACC) du véhicule (2) est déterminée en fonction d'une vitesse de véhicule (VEH_VEL) du véhicule (2) et d'au moins une vitesse de roue (WHEEL_VEL) d'une roue (4) du véhicule (2).

5. Procédé selon l'une quelconque des revendications précédentes, avec lequel une vitesse de roue (WHEEL_VEL) d'au moins une roue (4) du véhicule (2) est déterminée et avec lequel le décalage de signal (OFF_SIG) du capteur de taux de tangage est déterminé en fonction du signal (OMEGA_TETA_SIG) du capteur de taux de tangage dans le cas où une valeur de la vitesse de roue déterminée (WHEEL_VEL) de la roue (2) correspondante est inférieure à une seconde valeur seuil prédéfinie (THD_2).

6. Procédé selon l'une quelconque des revendications précédentes, avec lequel une vitesse de véhicule (VEH_VEL) est déterminée et avec lequel le décalage de signal (OFF_SIG) du capteur de taux de tangage est déterminé en fonction du signal (OMEGA_TETA_SIG) du capteur de taux de tangage dans le cas où une valeur de la vitesse de véhicule déterminée (VEH_VEL) est inférieure à la seconde valeur seuil prédéfinie (THD 2).

7. Procédé selon l'une quelconque des revendications précédentes, avec lequel une dérivée dans le temps (SIG_DRV) du signal (OMEGA_TETA_SIG) du capteur de taux de tangage est déterminée et avec lequel le décalage de signal (OFF_SIG) du capteur de taux de tangage est déterminé en fonction du signal (OMEGA_TETA_SIG) du capteur de taux de tangage dans le cas où une valeur de la dérivée dans le temps (SIG_DRV) du signal (OMEGA_TETA_SIG) du capteur de taux de tangage est inférieure à une troisième valeur seuil prédéfinie (THD_3).

8. Dispositif pour déterminer un décalage de signal (OFF_SIG) d'un capteur de taux de tangage d'un véhicule (2), qui est conçu pour
- enregistrer un signal (OMEGA_TETA_SIG) du capteur de taux de tangage,
- déterminer une accélération longitudinale (ACC) du véhicule (2),
- déterminer une dérivée dans le temps (ACC_DRV) de l'accélération longitudinale (ACC),
- vérifier si une valeur de la dérivée dans le temps (ACC_DRV) de l'accélération longitudinale (ACC) est inférieure à une première valeur seuil prédéfinie (THD_1),
- déterminer le décalage de signal (OFF_SIG) du capteur de taux de tangage en fonction du signal (OMEGA_TETA_SIG) du capteur de taux de tangage dans le cas où la valeur de la dérivée dans le temps (ACC_DRV) de l'accélération longitudinale (ACC) est inférieure à la première valeur seuil prédéfinie (THD 1).
